Europäisches Patentamt

European Patent Office

Office européen des brevets

(11) Publication number: **0 024 945**

**B1**

(12) **EUROPEAN PATENT SPECIFICATION**

(45) Date of publication of patent specification: **02.05.85**

(51) Int. Cl.⁴: **G 01 L 9/12, G 01 L 9/00**

(21) Application number: **80303057.6**

(22) Date of filing: **03.09.80**

(54) Variable capacitance pressure transducer.

(30) Priority: **04.09.79 US 72536**

(43) Date of publication of application:
**11.03.81 Bulletin 81/10**

(45) Publication of the grant of the patent:
**02.05.85 Bulletin 85/18**

(84) Designated Contracting States:
**DE FR GB IT NL**

(56) References cited:
US-A-3 634 727
US-A-4 084 438
US-A-4 203 128

**28th ELECTRONIC COMPONENTS
CONFERENCE, April 24-26, 1978, ANAHEIM
(CA) S. PENNINGTON et al.: "Properties of
electromechanical devices utrilizing thin
silicon diaphragms" pages 435-439**

**IEEE TRANSACTIONS ON ELECTRON
DEVICES, vol. ED-27, no. 5, May 1980 NEW
YORK (US) C.S. SANDER et al. "A monolithic
capacitive pressure sensor with pulseperiod
output" pages 927-930**

(73) Proprietor: **FORD MOTOR COMPANY LIMITED
Eagle Way
Brentwood Essex CM13 3BW (GB)**

(84) **GB**

(73) Proprietor: **FORD-WERKE
AKTIENGESELLSCHAFT
Ottoplatz 2 Postfach 21 03 69
D-5000 Köln 21 (DE)**

(84) **DE**

(73) Proprietor: **FORD FRANCE SOCIETE ANONYME
344 Avenue Napoléon Bonaparte B.P. 307
F-92506 Rueil Malmaison Cedex (FR)**

(84) **FR**

(73) Proprietor: **Ford Motor Company
The American Road
Dearborn, MI 48121 (US)**

(84) **IT NL**

(72) Inventor: **Giachino, Joseph Mario
34368 Oak Forest Drive
Farmington Hills Michigan 48018 (US)**
Inventor: **Haeberle, Russell James
43984 Arlington Road
Canton Michigan 48187 (US)**

Courier Press, Leamington Spa, England.

(56) References cited:
**IEEE TRANSACTIONS ON ELECTRON
DEVICES, vol. ED-26, no. 12, December 1979
NEW YORK (US) S.K. CLARK et al.: "Pressure
sensitivity in anisotropically etched thin-
diaphragm pressure sensors" pages 1887-1896**

(72) Inventor: **Crow, Joseph William
14481 Ellen Drive
Livonia Michigan 48154 (US)**

(74) Representative: **Messulam, Alec Moses et al
A. Messulam & Co. 24 Broadway
Leigh on Sea Essex SS9 1BN (GB)**

## Description

This invention relates to variable capacitance pressure transducers. Variable capacitance pressure transducers usually have at least two spaced conductive plates, the spacing between which may be varied in response to fluctuations in fluid pressure acting on at least one of the plates thereby producing a variation in capacitance. Such transducers are suitable for use in sensing either absolute or gauge pressures or pressure differentials.

Generally, devices for measuring or detecting changes in pressure either detect motion of a detecting element or stress induced in a detecting element. Motion type pressure transducers employ a diaphragm or other movable element that is responsive to change in fluid pressures acting on it to produce motion of an element that can be detected. The motion may be the movement of an inductor in a magnetic circuit, the movement of the wiper arm on a variable resistive element, or, as in the case of the present invention, may produce variation of the spacing between the plates of a capacitor. If the movement produces such a capacitance variation, this may be used to produce a change in electrical frequency of a circuit associated with the variable capacitance pressure transducer. The stress type of pressure transducer indicates pressure variation as a change in stress in a material subjected to the pressure variations. The most recent form of such devices have employed piezoresistive or piezoelectric devices. The piezoresistive devices typically have been formed by resistive bridge circuits diffused or otherwise formed in silicon or other semiconductive material. The resistive elements in the semiconductor material are isolated from the underlying regions of the material by the formation of reverse-biased PN junctions. Piezoelectric pressure transducers, on the other hand, and responsive to dynamic pressure variations and produce an output as a result of electrical charge separation under the dynamic pressure variation.

Recently, motor vehicle applications have required the use of pressure sensors for measuring both ambient and subatmospheric pressure levels. In internal combustion engine applications, fine control of fuel metering has required that the rapidly-fluctuating pressure levels within the intake manifold of the engine be measured as well as the less-rapidly fluctuating ambient pressure levels. Sensors able to measure these pressures reliably and with adequate response time have been difficult to obtain and are very expensive. Perhaps the best pressure sensor thus far available is the ceramic pressure transducer type. This variable capacitance sensor has a thick ceramic element on which is deposited a metal film. A second and very thin ceramic plate or diaphragm also has a metal film deposited on it and is attached with a glass frit or the like to the thicker ceramic element. The metal films on the ceramic element constitute the plates of a capacitor. The thin ceramic diaphragm responds to pressure variations to produce a small change in capacitance that is used to vary the frequency produced by an electronic oscillator.

Sensors or transducers of the type described in the preceding paragraph are expensive because of their large size and because they must be manufactured individually. Also, a ceramic pressure transducer of this type may not be tested until it has been assembled with its associated electronic circuitry. If it is found to be defective, the entire assembly then must be discarded.

A pressure transducer that could be manufactured by batch-processing techniques is a desirable device. Also desired is a pressure transducer that is of small size and can be tested prior to assembly with electronic circuitry that may be associated with the device to produce a signal proportional to the pressure detected by the transducer element. The pressure transducer should be inexpensive with respect to the materials utilized, should be reliable and should be cost effective as compared to prior art devices. Moreover, the pressure sensor should be easily calibrated, should be mass-producable at low cost and should provide an accurate and reproducable variable parameter in response to fluctuations in the pressure to be sensed. Desirably, the pressure transducer should be manufacturable for use over various pressure ranges.

In a thesis submitted to Case Western Reserve University by Thomas Mark Grill in January 1978 in partial fulfillment of the requirements of the Degree of Master of Science, and entitled "The Design of an Integrated Circuit Capacitance Transducer" intended for "in vivo" bio-medical applications, a transducer having a pressure sensitive capacitor is referred to. One plate of the capacitor is a diaphragm that is etched into the silicon substrate with a four micrometer ($\mu$m) deep cavity in the top surface. The other plate is a metallized glass cover that is electrostatically sealed to the silicon substrate over the cavity thus forming a totally enclosed chamber. To obtain a DC voltage proportional to the value of the pressure sensitive capacitor, an FET bridge is driven by a squarewave. The pressure sensitive capacitor and a reference capacitor are then charged and discharged through the bridge.

U.S. Patent 4,025,942 describes a low pressure transducer. The transducer comprises piezoresistive bridges deposited upon or diffused within a wafer or slice of N-type silicon. The wafer or slice then is bonded, with the use of anodic or diffusion bonding technique, to a glass sheet. The composite structure then is scribed or cut to separate the bridge circuit patterns into individual cells. The bridge circuit composite cell then is attached to a much larger silicon diaphragm with the use of an inorganic bonding technique, similar to that used to bond the wafer to the glass, before scribing.

U.S. Patent 3,417,361 describes a semiconductive pressure transducer comprising an enclosure formed as a unitary structure of mechanically homogeneous semiconductive material.

The stress-sensitive element of the transducer is a single crystal circular diaphragm having a diffused surface layer electrically isolated from the body of the diaphragm by a rectifying junction.

U.S. Patent 3,858,097 describes a capacitance type pressure transducer comprising a hollow body having spaced opposing walls supported at their edges. Electrical conducting means on the deflectable portions of the walls form the plates of a pressure sensitive capacitor. The hollow body is made of a dielectric material, such as glass or quartz.

U.S. Patent 3,993,939 describes a pressure responsive diaphragm attached to a substrate that carries a thick film metallic coating. The coating is covered by a dielectric glass so that the diaphragm and thick film coating comprise a pressure variable capacitor. Changes in pressure cause the diaphragm to roll against the glass thereby varying the area of contact and the capacity.

U.S. Patent 3,328,653 describes a thin-film pressure transducer comprising a fixed electrode sandwiched between a very thin, flexible, upper layer of dielectric material and a rigid base layer of dielectric material. The upper layer carries a thin film of metal opposite the fixed electrode.

U.S. Patent 3,397,278 describes an anodic bonding technique suitable for use in bonding an inorganic insulator element to a metallic element. Specifically, bonding of borosilicate glass and a semiconductor, such as silicon, is accomplished.

U.S. Patent 3,697,917 describes a pressure transducer that utilizes a silicon strain gage diaphragm as a pressure sensor. The diaphragm is bonded to a tubular glass support by an anodic bonding process.

The present invention seeks to provide a capacitive pressure transducer in which a predetermined pressure may be established during manufacture in the space between the capacitive plates and in which the connections to both plates of the transducer may be made from the same side of the transducer.

According to the present invention, there is provided a variable pressure capacitor transducer comprising at least two spaced conductive plates, the spacing between which varies in response to fluctuations in fluid pressure acting on at least one of the plates, wherein one of the plates is formed by a conductive material on the surface of a body of insulating material and the other plate is formed by a body of semiconductive material having a recess positioned in alignment with and spaced from the conductive material on the insulating material, the semiconductive material being bonded to the insulating material along a boundary surrounding the conductive material thereon, characterised in that the insulating material is penetrated by a sealed hole containing an electrically conductive material in contact with the conductive material on the surface of the insulating material, said hole being suitable for use during manufacture of the transducer for establishing a predetermined pressure within the volume of the transducer contained within the bond boundary of and between the insulating material and the semiconductive material and in that the insulating material is penetrated by a further sealed hole at a location along the bond boundary, said hole containing an electrically conductive material in contact with the semiconductor material.

The invention will now be described further, by way of example, with reference to the accompanying drawings, in which:

Figure 1 is an enlarged plan view of an improved variable capacitance pressure transducer according to the invention;

Figure 2 is a further enlarged elevational view of the transducer of Figure 1; and

Figure 3 is an even further enlarged partial sectional view, taken along the line III—III in Figure 1, of the pressure transducer.

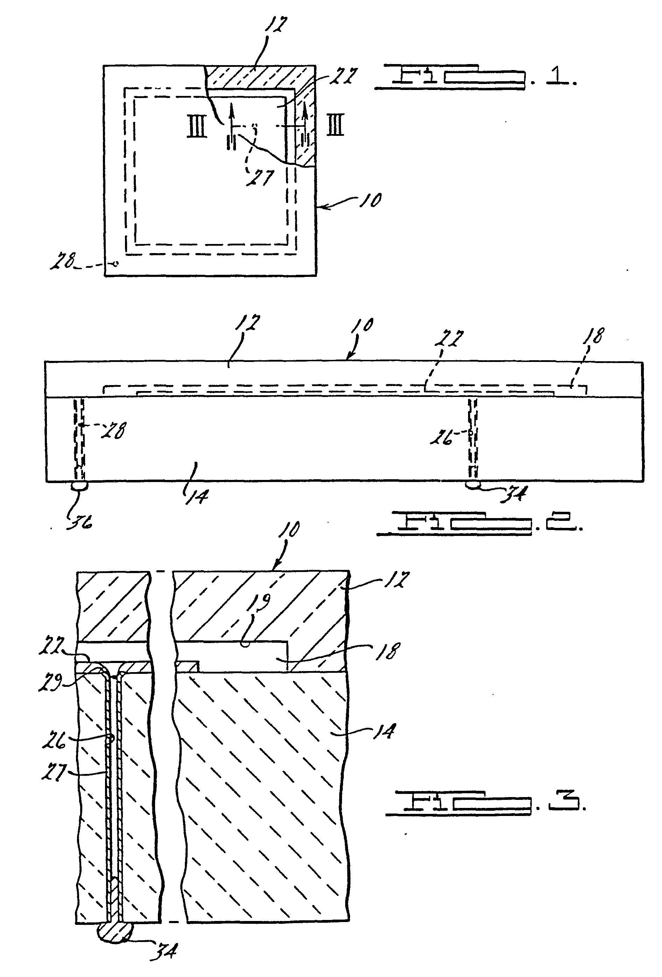

With particular reference now to the drawings, wherein like numerals refer to like parts in the several views, there is shown a variable capacitance pressure transducer generally designated by the numeral 10. The improved pressure transducer comprises two main elements, a semiconductor material 12 and an insulating material 14 to which the semiconductor material is bonded. The semiconductor material 12 may be doped silicon and the insulating material preferably is borosilicate glass, such as is obtainable from the Corning Glass Works under the trademark "Pyrex" and may be of the type designated 7740.

The improved pressure transducer 10 has a recessed area or volume 18 defined by a surface 19 in the silicon semiconductor material that is formed by etching. The etching may be accomplished in the conventional way with the use of well known etching techniques, but sputter etching or milling by ion bombardment may be desirable. The semiconductor material 12 is intended to act as an electrical conductor and therefore is highly doped, preferably with boron, to give it P-type conductivity.

The glass 14, within the recessed area or volume 18 of the semiconductor material, has a conductive material on a portion of its surface located within the recessed area. The conductive material 22 on the glass 14 forms a plate of a capacitor another plate of which is formed of the semiconductor material 12. The semiconductor material 12 is in alignment with and spaced from the conductive material on the glass insulating material. Also, the semiconductor material 12 is bonded to the glass insulating material 14 along a boundary that surrounds the conductive material 22. The bonding may be accomplished with the use of an anodic bonding technique, such as one of those described in the aforementioned U.S. Patent 3,697,917 to Oreth et al; 3,397,278 to Pomerantz; or 4,025,942 to Kurtz. The anodic or diffusion bonding techniques described in these patents are especially suitable for bonding silicon semiconductor material to glass of the type suggested for use herein, techniques known to those skilled in the art also may be used to produce adhesion of the surface of the semiconductor material 12 to the surface of the glass dielectric material 14.

The pressure transducer 10 has two holes 26 and 28 that preferably are obtained by laser drilling. These holes are used to allow electrical contact to be made to the semiconductor material forming one plate of the capacitive transducer and to the conductive material 22 forming the other plate of the transducer. The conductive material 22 and the semiconductor material are electrically contacted, respectively, by the deposition in each of the holes 26 and 28 of a conductor in the form of metal film. The conductive metal material may be formed with the use of a solution that contains a salt. The salt solution is dried and heated to cause the salt to decompose into a metal and a second element or compound that is vaporized or given off as a gas, in accordance with known techniques. Platinum and other metals are available in the form of salt solutions for use in this manner, and a salt solution preferred is Hanovia bright platinum available from Englehard Industries, Inc.

The electrically conductive material 22 on the surface of the glass dielectric insulating material 14 is applied to the insulating material by vapor deposition or other suitable technique so that it forms an electrical junction with the conductive material 27 in the hole 26. The vapor deposition layer 22 of conductive material, which preferably is aluminum, may be on the order of 200 nm (2000 angstroms) thick and leaves an opening when deposited such that the hole 26 continues to communicate with the recessed area or volume 18 of the pressure transducer.

Because the hole 26 penetrates the dielectric insulating material, and communicates with the recessed area or volume 18, the pressure transducer may be placed into an evacuated container to allow removal of air or other gaseous pressure, from the recessed area or volume 18. After the establishment of a desired pressure, within the recessed area or volume 18, the hole 26 is sealed with solder as shown at 34. Simultaneously, the hole 28, whose conductive material makes electrical contact with the heavily doped silicon semiconductor material 12, is sealed with solder 36. Solder bumps 34 and 36 remaining may be used to make electrical contact to the plates of the capacitor formed, respectively, by the conductive material 22 and the aligned and spaced apart semiconductor material 12.

It should be particularly noted that the hole 26 penetrating the insulating material of the pressure transducer allows any predetermined pressure to be established within the recessed area or volume 18. The hole 26 may be used during manufacture of the pressure transducer to establish the predetermined pressure within the volume of the pressure transducer contained within the dielectric material to semiconductor material bond-boundary.

The thickness of the semiconductor material 12 may be selected as required for the application of the pressure transducer, but a thickness of about 135 μm has been found satisfactory. On the other hand, the glass dielectric material 14 may have a thickness of about 1.50 mm. This is much thicker than the semiconductor thickness, the thicknesses of these materials being deliberately distorted in the drawings to allow illustration. The depth of the etched recessed area or volume 18 of the semiconductor material may be about four μm. The area of the recess 18 may be about 20.25 mm$^2$, and may be obtained by etching the silicon semiconductor material with hydrazine solution applied to the semiconductor material. The hydrazine solution preferably is a mixture commercially available and the semiconductor material preferably has a 100 crystal orientation. The etched areas will tend to be square with the use of this silicon material and will have edges of about 4.5 mm in order to produce an area of about 20.25 mm$^2$.

In the application of the pressure transducer, the semiconductor material 12 as the plate of a capacitor moves in response to variations in the pressure differential between the fluids acting on its exposed surface and within the recessed area or volume 18. If the recessed area or volume 18 is activated, the pressure transducer will response to variations in the absolute pressure of the fluid acting on the exposed surface of the semiconductor material 12. Of course, deflection of the preferred glass dielectric insulating material 14 is limited due to its much greater thickness and physical properties.

## Claims

1. A variable capacitor pressure transducer comprising at least two spaced conductive plates (12, 22), the spacing between which varies in response to fluctuations in fluid pressure acting on at least one of the plates, wherein one of the plates is formed by a conductive material (22) on the surface of a body of insulating material (14) and the other plate is formed by a body of semiconductive material (12) having a recess (18) positioned in alignment with and spaced from the conductive material (22) on the insulating material (14), the semiconductive material (12) being bonded to the insulating material (14) along a boundary surrounding the conductive material thereon, characterised in that the insulating material (14) is penetrated by a sealed hole (26) containing an electrically conductive material in contact with the conductive material (22) on the surface of the insulating material, said hole (26) being suitable for use during manufacture of the transducer for establishing a predetermined pressure within the volume (18) of the transducer contained within the bond boundary of and between the insulating material (14) and the semiconductive material (12) and in that the insulating material (14) is penetrated by a further sealed hole (28) at a location along the bond boundary, said hole (28) containing an electrically conductive material in contact with the semiconductor material (12).

2. A transducer according to Claim 1 wherein the insulating material (14) has a surface opposite that on which the conductive material (22) is carried, the said surface having a raised electrical contact thereon in electrical contact with one of the plates.

## Revendications

1. Transducteur de pression à condensateur variable comprenant au moins deux plaques conductrices espacées (12, 22), entre lesquelles l'écartement varie en réponse aux fluctuations d'une pression de fluide agissant sur au moins l'une des plaques, dans lequel l'une des plaques est formée par une matière conductrice (22) sur la surface d'un corps en matière isolante (14), et l'autre plaque est formée par un corps de matière semiconductrice (12) ayant une cavité (18) disposée en alignement avec la matière conductrice (22) et espacée de celle-ci sur la matière isolante (14), la matière semiconductrice (12) étant liée à la matière isolante (14) le long d'une limite entourant la matière conductrice sur celle-ci, caractérisé en ce que la matière isolante (14) est pénétrée par un trou fermé (26) contenant une matière électriquement conductrice en contact avec la matière conductrice (22) sur la surface de la matière isolante, ledit trou (26) étant approprié pour être utilisé lors de la fabrication du transducteur pour établir une pression prédéterminée à l'intérieur du volume (18) du transducteur contenu à l'intérieur de la limite de la liaison de la matière isolante (14) et de la matière semiconductrice (12) et entre celles-ci, et en ce que la matière isolante (14) est pénétrée par un autre trou fermé (28) en un point situé le long de la limite de la liaison, ledit trou (28) contenant une matière électriquement conductrice en contact avec la matière semiconductrice (12).

2. Un transducteur suivant la revendication 1, dans lequel la matière isolante (14) présente une surface opposée à celle sur laquelle est portée la matière conductrice (22), ladite surface ayant un contact électrique en saillie sur elle en contact électrique avec l'une des plaques.

## Patentansprüche

1. Druckwandler veränderlicher Kapazität, bestehend aus mindestens zwei auf Abstand angeordneten leiterplatten (12, 22), deren gegenseitiger Abstand sich mit Schwankungen im auf mindestens eine der Platten einwirkenden Flüssigkeitsdruck ändert, worin eine der Platten von leitendem Material (22) auf der Oberfläche eines Körpers aus Isolierstoff (14) und die andere Platte von einem Körper aus halbleitendem Material (12) mit einer mit dem leitenden Material (22) auf dem Isolierstoff (14) auf Abstand davon ausgerichtet angeordneten Ausnehmung (18) gebildet werden, wobei das halbleitende Material (12) mit dem Isolierstoff (14) entlang einer das leitende Material darauf umgebenden Begrenzung verbunden ist, dadurch gekennzeichnet, dass der Isolierstoff (14) von einer abgedichteten, ein elektrisch leitendes Material in Kontakt mit dem leitenden Material (22) auf der Oberfläche des Isolierstoffs enthaltenden Bohrung (26) durchsetzt wird, wobei diese Bohrung (26) dafür geeignet ist, bei der Herstellung des Wandlers einen vorbestimmten Druck im innerhalb der Verbundbegrenzung des Isolierstoffs bzw. zwischen dem Isolierstoff (14) und dem halbleitenden Material (12) enthaltenen Volumen (18) des Wandlers einzustellen, und dass der Isolierstoff (14) an einer Stelle entlang der Verbundbegrenzung von einer weiteren abgedichteten Bohrung (28) durchsetzt wird, wobei diese Bohrung (28) ein elektrisch leitendes Material in Kontakt mit dem halbleitenden Material (12) enthält.

2. Wandler nach Anspruch 1, worin der Isolierstoff (14) eine der das leitende Material (22) tragenden entgegengesetzte Oberfläche aufweist, auf der ein erhöhter elektrischer Kontakt in elektrisch leitender Verbindung mit einer der Platten angeordnet ist.

_FIG. 1._

_FIG. 2._

_FIG. 3._